# EUROPÄISCHE PATENTSCHRIFT

(11) **EP 2 365 900 B1**
(45) Veröffentlichungstag und Bekanntmachung des Hinweises auf die Patenterteilung: **13.02.2013**
(21) Anmeldenummer: 09763824.1
(22) Anmeldetag: 18.11.2009
(51) Int. Cl.: B29B 9/06

(54) **VORRICHTUNG UND VERFAHREN ZUR HEIßABSCHLAG-GRANULIERUNG**
APPARATUS AND METHOD FOR GRANULATING HOT CUT
DISPOSITIF ET PROCÉDÉ DE GRANULATION PAR FRACTIONNEMENT À CHAUD

(30) Priorität: 16.12.2008 AT 19652008
(43) Veröffentlichungstag der Anmeldung: 21.09.2011
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); HACKL, Manfred, A-4040 Linz-Urfahr (AT); WENDELIN, Gerhard, A-4030 Linz (AT)
(74) Vertreter: Wildhack & Jellinek
(86) Internationale Anmeldenummer: PCT/AT2009/000445
(87) Internationale Veröffentlichungsnummer: WO 2010/075597

(56) Entgegenhaltungen:
- WO-A1-2006/122340
- DE-A1- 10 302 645
- DE-A1- 19 720 722
- DE-U1- 20 300 009

## Beschreibung

Die Erfindung betrifft eine Vorrichtung zum Granulieren gemäß dem Anspruch 1 und ein Verfahren gemäß dem Anspruch 10.

Granuliervorrichtungen zur Heißabschlaggranulierung, bei denen die abgeschlagenen Granulate durch einen rasch strömenden Flüssigkeitsfilm bzw. Flüssigkeitsring, z.B. Wasser, erfasst, gekühlt und ausgebracht werden, sind in verschiedenen Ausführungsformen bekannt. Bei diesen Vorrichtungen ist ein kritischer Bereich die Abdichtung der Messerwelle gegen das im Granuliergehäuse rotierende Wasser. Ein Austritt von Wasser im Bereich zwischen der Welle und dem Granuliergehäuse soll vermieden werden, da Wasser sonst unerwünschterweise in den Bereich des Motors gelangen könnte. Zu diesem Zweck sind aus dem Stand der Technik verschiedenen Dichtungen bekannt, die die um ihre Achse rotierende Welle möglichst gut abdichten.

Noch schwieriger wird die Situation, wenn die Welle nicht nur um ihre eigene Achse rotiert, sondern zusätzlich auch axial verschiebbar sein soll, um den Abstand der Messer zur Lochplatte einzustellen und den Schneiddruck der Messer optimal anzupassen. Derartige Granuliervorrichtungen, bei denen die das Messer tragende Welle in Achsrichtung verstellbar ist, sind ebenfalls in vielen Ausführungen bekannt. In diesen Fällen muss die Dichtung nicht nur einen Wasserdurchtritt verhindern und die Rotation der Welle im Lager aushalten, sondern zudem auch dauerhaft die axiale Verstellbarkeit gewährleisten.

Häufig ist dabei im Stand der Technik die Welle des Messerkopfes in einer axial verschiebbaren Pinole gelagert. Dadurch kann stets der gewünschte Anpressdruck der Messer an der Lochplatte eingestellt werden. Auf die Messerwelle wird das Drehmoment zumeist über eine Zahnkupplung übertragen. Wenn als Kühlmedium für die abgeschlagenen Granulatkörnchen Wasser verwendet wird, was zumeist der Fall ist, muss die Messerwelle gegenüber dem Gehäuse abgedichtet werden, um einen Wasseraustritt durch das Lager hindurch zu verhindern. Hierbei ergeben sich reibungsbedingte Schwierigkeiten. Die axiale Verschiebung der Messerwelle bedingt auch eine Verschiebung der Lauffläche eines Dichtringes, welcher die Wasserabdichtung bewirkt, so dass sich die Reibungsverhältnisse laufend ändern. In ähnlicher Weise ändern sich auch die Reibungswerte der Zahnkupplung bei Verschiebung der Messerwelle. Weiters ist zu beachten, dass die die Lagerung bildende Pinole in einem Gleitlager läuft, das geschmiert werden muss. Auch hier kommt es zu zeitlich unterschiedlichen Reibungswerten, da das Schmiermittel (zumeist Öl) nach einiger Zeit mehr oder weniger verharzt, so dass ein relativ hohes Losbrechmoment entsteht, welches der Forderung entgegensteht, dass in der Regel nur eine geringfügige axiale Reibung gewünscht ist. Darüber hinaus bedingt eine Pinolenlagerung einen gewissen Aufwand. Eine schleifende Lagerung der Welle im Gehäuse mittels zweier Dichtringe mit dazwischenliegendem Ölfilm hat auch den Nachteil, dass die Lebenszeit einer Dichtung irgendwann erschöpft ist und die Dichtungen porös oder undicht werden, der Ölfilm ausläuft und sich dann die Welle festfrisst und eine axiale Verschiebbarkeit der Welle nicht mehr gewährleistet ist.

Zur Lösung dieses Problems sind aus dem Stand der Technik diverse Ausführungen bekannt, beispielsweise das Ersetzen einer Pinolenlagerung der Welle durch eine Motorlagerung. Außerdem wurde verschiedene Aufhängungen des Motors entwickelt, beispielsweise in der DE 10 302 645, die eine Vorrichtung gemäβ dem Oberbegriff des Auspruchs 1 und ein Verfahren gemäβ dem Oberbegriff des Auspruchs 10 offenbart oder der WO 2006/122340, um die axiale Verschiebbarkeit der Messerwelle auf Dauer zu gewährleisten.

Es ist nunmehr Aufgabe der vorliegenden Erfindung eine Vorrichtung der eingangs geschilderten Art zu schaffen, bei der auf konstruktiv einfache und kostengünstige Weise die Dichtheit im Bereich der Welle gewährleistet ist.

Diese Aufgabe wird durch die kennzeichnenden Merkmale des Anspruchs 1 beziehungsweise durch die Kennzeichnenden den Merkmale des Anspruchs 10 gelöst. Hierbei wird vorgesehen, dass zwischen der Welle und demjenigen Bereich des Granuliergehäuses, in dem die Welle das Granuliergehäuse durchsetzt, eine, eine durchgehende Fluidverbindung zwischen dem Inneren des Granuliergehäuses und der äußeren Umgebung herstellende, Durchströmöffnung ausgebildet ist.

Dieser Lösung liegt die überraschende Erkenntnis zugrunde, dass sich durch die Ableitung des strömenden Kühlmediums aus dem Granuliergehäuse bzw. durch die relativ rasche Wasserströmung, analog zu einer Wasserstrahlpumpe im Granuliergehäuse ein gewisser Unterdruck im Vergleich zur äußeren Umgebung ausbildet. Durch diesen Unterdruck wird Umgebungsluft von außen durch die Durchströmöffnung ins Innere des Granuliergehäuses angesaugt. Durch diese nach innen gerichtete Luftströmung kann das Kühlmedium nicht mehr auf diesem Weg, und zwar neben bzw. entlang der Welle, gegen den gegenläufigen Luftstrom nach außen austreten. Es hat sich überraschenderweise gezeigt, dass dieses Prinzip bereits bei sehr geringem Unterdruck im Granuliergehäuse bzw. bei sehr geringen Druckunterschieden zufriedenstellend funktioniert.

Aus diesem Grund bzw. durch diese bewusste Ausbildung einer Leckage bzw. einer undichten Stelle bzw. einer freien Öffnung, an einer Position, an der bislang immer höchste Dichtheit, bei meist gleichzeitiger axialer Beweglichkeit, gefordert wurde, ist eine Abdichtung der Welle durch Dichtringe oder Schmiermittel zur Verhinderung des Wasseraustrittes zwischen Welle und Gehäuse nun nicht mehr erforderlich und es kann auf nicht so dichte, härtere, aber damit langlebigere Dichtungen zurückgegriffen werden bzw. die Dichtung kann sogar gänzlich entfallen. Die Dichtheit zwischen der Welle und dem Granuliergehäuse ist trotzdem gewährleistet und es kann kein Wasser austreten.

Auf diese konstruktiv sehr einfache Weise kann somit eine Granuliervorrichtung geschaffen werden, die einerseits dicht gegen den Austritt von Kühlmedium im kritischen Bereich der Welle ist und zudem auf den Einsatz teurer und anfälliger Dichtungen verzichten kann.

Weitere vorteilhafte Ausgestaltungsmöglichkeiten bzw. Ausführungsformen werden durch die Merkmale der abhängigen Ansprüche bestimmt:

Gemäß einer bevorzugten Ausführungsform ist die Welle axial in Richtung ihrer Längsachse verstellbar bzw. verschiebbar ist, so dass die Messer die Granulatkörnchen mit optimalem Schneiddruck abschlagen. Auch bei dieser Ausführungsform einer Heißabschlag-Granuliervorrichtung, bei der die Welle nicht nur um die eigene Achse rotiert, sondern zusätzlich auch axial verstellbar ist, bietet die erfindungsgemäße Vorrichtung wesentliche Vorteile. Einerseits bleibt auch bei einer derartigen axial verstellbaren Welle die Dichtheit gewährleistet. Zudem war, wie einleitend bemerkt, aus dem Stand der Technik die Abdichtung einer axial verstellbaren Welle nicht ganz zufriedenstellend gelöst, insbesondere hinsichtlich der geringen Lebensdauer der Dichtungen bzw. durch die eingschränkte Verschiebbarkeit. Gerade die Tatsache, dass bei der erfindungsgemäßen Ausführungsform keine verschleißanfälligen Dichtungen mehr erforderlich sind, bringt den zusätzlichen Vorteil, dass die axiale Verschiebbarkeit der Welle zur Justierung des Messerkopfes dauerhaft gewährleistet ist.

Gemäß einer bevorzugten Ausführungsform ist die Welle von der Durchströmöffnung vollständig und allseitig in Form eines Ringspaltes bzw. eines Zylinderringes bzw. zylindermantelförmig umgeben und die Welle durchsetzt das Granuliergehäuse berührungsfrei bzw. ist ein ringsspaltförmiger Freiraum ausgespart. Dadurch wird die Reibung der nun freilaufenden und nicht mehr schleifenden Welle verringert, was sich wiederum in einer Material- und Energieersparnis niederschlägt.

Weiters ist es in diesem Zusammenhang vorteilhaft, wenn die Welle und/oder der Motor außerhalb des Granuliergehäuses gelagert sind. Dadurch wird, bei Erhaltung der Dichtheit und der Lebensdauer, die Reibung der Welle minimiert und die Effektivität des Luftstromes gesteigert. Alternativ könnte die Welle 9, gegebenenfalls auch, über ein im Inneren des Granuliergehäuses 1 angeordnetes Lager gelagert sein.

In einer weiteren Ausgestaltung der Erfindung kann es vorteilhaft sein, wenn im Bereich des Durchtritts der Welle in das Granuliergehäuse im Inneren des Granuliergehäuses ein die Welle umgebendes Flanschelement angeordnet ist, wobei die Durchströmöffnung im Flanschelement ausgebildet ist und die Welle zylindermantelförmig bzw. in Form eines Ringspaltes umgibt. Durch das Flanschelement wird der Eintritt von Kühlmedium zusätzlich erschwert. Außerdem kann das Flanschelement als Führung für die Welle dienen.

Gemäß einer bevorzugten Ausführungsform ist die Durchströmöffnung permanent offen bzw. gewährt einen permanenten Gaseintritt bzw. Gasdurchtritt, wodurch allfällige Verstopfungen durch Wasser oder Granulatkörnchen vermieden werden können.

Weiters ist es vorteilhaft, wenn die Durchströmöffnung frei von Dichtmitteln, insbesondere frei von einem oder mehreren Dichtringen und/oder einem Schmiermittelfilm, ist. Durch den gänzlichen Verzicht auf derartige zusätzliche Dichtungsmittel wird die Vorrichtung - bei gleichzeitigem Erhalt der Dichtheit - bei Verminderung der Reibung und Verbesserung der axialen Verschiebbarkeit, weniger störungsanfällig, kostengünstiger sowie baulich einfacher.

Gemäß einer weiteren bevorzugten Ausführungsform kann in der Durchströmöffnung ein, vorzugsweise im Flanschelement gelagertes bzw. ausgebildetes, nach innen förderndes, die Welle umgebendes Rückfördergewinde angeordnet sein, wodurch eine gewisse Ausfallssicherung gegen einen allfälligen Wasseraustritt bei Verstopfung der Durchströmöffnung od. dgl. besteht und in den Spalt eintretendes Wasser auch ohne Luftstrom wieder ins Granuliergehäuses zurückgefördert werden kann. Gemäβ der Erfindung ist die Vorrichtung als an sich bekannte Heißabschlag-Granulierungsvorrichtung ausgebildet, bei der im Granuliergehäuse ein umlaufender Flüssigkeitsring bzw. Flüssigkeitsmantel, z.B. aus Wasser, Wasser- Glykol etc. ausgebildet wird, wobei die Geschwindigkeit des Wasserstromes so einstellbar ist, dass ein ausreichend starker Luftstrom durch die Durchströmöffnung gegeben ist, um einen Aus- bzw. Durchtritt von Wasser durch die Durchströmöffnung zu verhindern. Durch die erhöhte Strömungsgeschwindigkeit des Kühlmediums bzw. beim Austritt des Kühlmediums aus dem Gehäuse wird ein höheres Vakuum bzw. ein höherer Unterdruck erzeugt und die Dichtheit des Systems erhöht.

Alternativ oder zusätzlich kann eine Vakuumpumpe vorgesehen bzw. am Granuliergehäuse angeschlossen sein, die den Unterdruck im Granuliergehäuse zumindest teilweise erstellt. So könnte auch bei abgeschaltetem oder zu geringem Wasserstrom die Dichtheit erhalten werden.

In diesem Zusammenhang ist es vorteilhaft, wenn das Granuliergehäuse stabil gegen Unterdruck ist und dass das Granuliergehäuse so ausgelegt ist bzw. dass die Undichtheiten des Granuliergehäuses so gering sind, dass immer ausreichend Luft durch die Durchströmöffnung ins Innere des Granuliergehäuses gesaugt wird und ein ausreichend starker Luftstrom durch die Durchströmöffnung gegeben ist, um einen Ausbzw. Durchtritt von Wasser durch die Durchströmöffnung zu verhindern. Insbesondere ist es vorteilhaft, wenn das Granuliergehäuse im Betrieb bis auf die Durchströmöffnung und die Zu- und Ableitungen für das Kühlmedium gasdicht ausgebildet ist. Dadurch wird die Wirkung der Strömung durch die Durchströmöffnung maximiert.

Weitere Kennzeichen und Vorteile der Erfindung ergeben sich aus der Beschreibung von vorteilhaften Ausführungsbeispielen, die in den Zeichnungen schematisch dargestellt sind.
Fig. 1 zeigt die erfindungsgemäße Vorrichtung
Fig. 2 zeigt eine alternative Ausführungsform der Vorrichtung

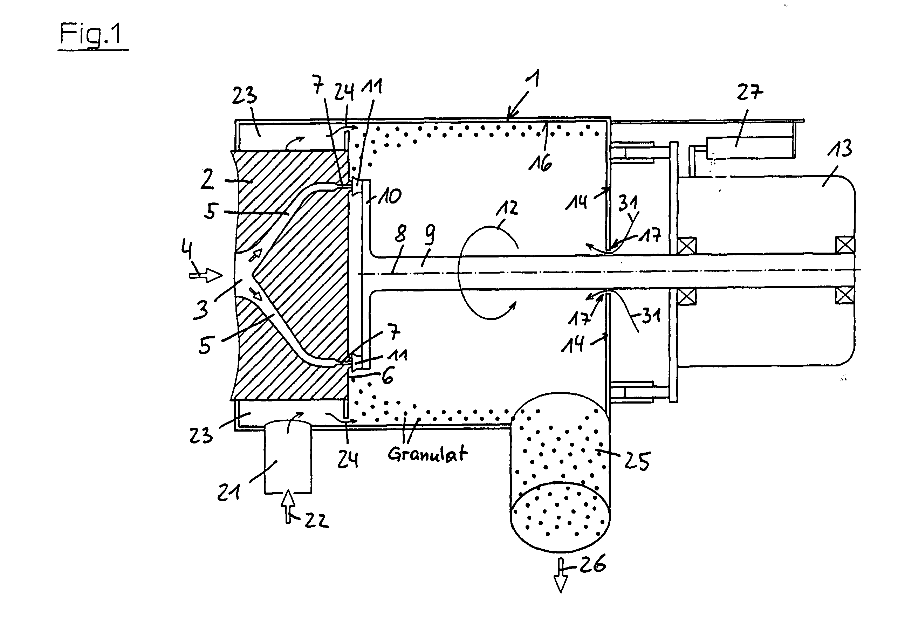

Die vorteilhafte Ausführungsform einer Vorrichtung gemäß Fig. 1 besitzt ein zylindrisches Granuliergehäuse 1, das an seinem, insbesondere einem Extruder zugewendeten Stirnende durch eine Lochplatte 2 und an seinem gegenüberliegenden Stirnende durch eine Endwandung 14 begrenzt ist. In der Lochplatte 2 ist ein Zufuhrkanal 3 für das zu granulierende plastifizierte Material bzw. die Schmelze, insbesondere thermoplastisches Kunststoffmaterial, vorgesehen, das in Richtung des Pfeils 4 aus dem Zufuhrkanal 3 in mehrere Verteilerkanäle 5 strömt, die an der Stirnfläche 6 der Lochplatte 2 in Düsen 7 münden, die im Kreis und in gleichmäßigen Abständen rund um die zentrale Längsachse 8 des Granuliergehäuses 1 angeordnet sind.

Diese Längsachse 8 bildet zugleich die Drehachse einer Welle 9, die an ihrem der Lochplatte 2 zugewendeten Ende einen Messerkopf 10 trägt, welcher mit mehreren Messern 11 bestückt ist, die bei der Drehung der Welle 9 um ihre Achse in Richtung des Pfeils 12 über die Mündungen der Düsen 7 streichen und dadurch die aus den Düsen 7 ausgepresste, strangförmige Kunststoffmasse zu Granulatkörnchen abschlagen. Die Drehung der Welle 9 bewirkt ein Motor 13, der außerhalb des Granuliergehäuses 1 hinter der Endwandung 14 angeordnet ist.

Um sicherzustellen, dass die Messer 11 stets mit dem gewünschten Anpressdruck bzw. dem optimalen Schneiddruck über die Mündungen der Düsen 7 streichen, ist bei der vorliegenden Ausführungsform die Welle 9, insbesondere samt dem sie antreibenden Motor 13, in axialer Richtung der Längsachse 8 relativ zum Granuliergehäuse 1 bewegbar bzw. verstellbar. Hierfür dient im vorliegenden Fall eine Verstelleinrichtung 27, die von einem Stellglied beliebiger Art gebildet sein kann, z.B. über Gewinde, einen Magnet, mittels Stellmotor usw. In radialer Richtung ist die Welle 9 nicht oder nicht wesentlich bewegbar. Die Verstelleinrichtung ist bei der Ausführungsform gemäß Fig. 1 am Granuliergehäuse 1 befestigt und greift am Gehäuse des Motors 13 an, die axiale Verstellbarkeit der Welle 9 kann aber auch anders erfolgen.

Ins Innere des Granuliergehäuses 1 wird im Betrieb ein Kühlmedium, insbesondere Kühlwasser oder eine Mischung aus Wasser und Glykol, eingeleitet. Dieses Kühlwasser wird über eine Leitung 21 in Richtung des Pfeils 22 tangential zugeführt und strömt in einen die Lochplatte 2 umgebenden Ringraum 23, aus welchem es durch zumindest eine Öffnung 24 in das Innere des Granuliergehäuses 1 eintritt, in Form eines Wasserfilmes bzw. Wasserringes an der Innenseite der Wand 16 entlang streicht und dabei die von den Messern 11 abgeschlagenen Granulatkörner ummittelbar nach ihrer Entstehung erfasst und abkühlt, sodass ein Zusammenbacken dieser Körner verhindert wird. Die abgekühlten Granulatteilchen werden zusammen mit dem Kühlwasser über eine Auslassleitung 25 in Richtung des Pfeils 26 aus dem Granuliergehäuse 1 abgeleitet.

Bei der Vorrichtung gemäß Fig. 1 handelt es sich im wesentlichen um eine an sich bekannte Heißabschlaggranuliervorrichtung, bei der der Abtransport der Granulatkörnchen durch den rotierenden Wasserfilm erfolgt.

Die Welle 9 durchsetzt das Granuliergehäuse 1 im zentralen Mittenbereich der Endwandung 14. Die Welle 9 ist nicht in der Endwandung 14 des Granuliergehäuses 1 gelagert, sondern ist in erster Linie vom Motor 13 getragen. Die Welle 9 durchsetzt das Granuliergehäuse 1 berührungsfrei und somit reibungsfrei bzw. ist vom Granuliergehäuse 1 beabstandet.

Der Bereich zwischen der Welle 9 und dem Granuliergehäuse 1 ist frei von einer schleifenden Dichtung, d.h. es ist in diesem Bereich keine Dichtung vorhanden und zwar weder Dichtringe noch Schmiermittelfilme od. dgl.. Es ist somit zwischen dem Inneren des Granuliergehäuses 1 und der äußeren Umgebung eine permanent offene Durchströmöffnung 17 ausgebildet, durch die Luft gemäß Pfeil 31 von außen ins Innere des Granuliergehäuses 1 strömen kann. Die Durchströmöffnung 17 liegt unmittelbar an der Welle 9 an bzw. führt direkt an der Welle 9 entlang bzw. ist die Welle 9 von der Durchströmöffnung 17 vollständig und allseitig zylindermantelförmig umgeben. Die Durchströmöffnung 17 weist die Form eines Zylinderringes bzw. eines Ringspaltes auf bzw. ist ein derartiger Freiraum ausgespart.

Durch die Ableitung des strömenden Kühlmediums aus dem Granuliergehäuse 1 heraus (Pfeil 26) bzw. durch die relativ rasche Wasserströmung, insbesondere beim Auslass 25, wird im Granuliergehäuse 1 analog zu einer Wasserstrahlpumpe, ein gewisser Unterdruck im Vergleich zur äußeren Umgebung ausbildet. Der Unterdruck wird auch durch das Design des Auslasses 25 und die Weiterführung des Kühlmediums in einem dichten System, z.B. einem Schlauch, beeinflusst.

Alternativ oder zusätzlich könnte der Unterdruck zumindest teilweise oder unterstützend auch über eine zuschaltbare Vakuumpumpe erzeugt werden. Das Granuliergehäuse 1 muss somit eine gewisse Beständigkeit gegen leichten bis mittleren Unterdruck aufweisen.

Durch diesen Unterdruck wird Umgebungsluft gemäß dem Pfeil 31 von außen durch die Durchströmöffnung 17 entlang der Welle 9 ins Innere des Granuliergehäuses 1 angesaugt. Durch diese nach innen gerichtete Luftströmung 31 kann das Kühlmedium nicht durch die Durchströmöffnung 17 gegen diese Luftströmung 31 nach außen austreten. Es hat sich überraschenderweise gezeigt, dass dieses Prinzip bereits bei sehr geringem Unterdruck im Granuliergehäuse 1 zufriedenstellend funktioniert. Der Bereich, durch den die Welle 9 das Granuliergehäuse 1 durchsetzt, ist somit dicht gegen den Austritt von Kühlmedium, wodurch in diesem Bereich auf den Einsatz teurer und anfälliger Dichtungen verzichtet werden kann.

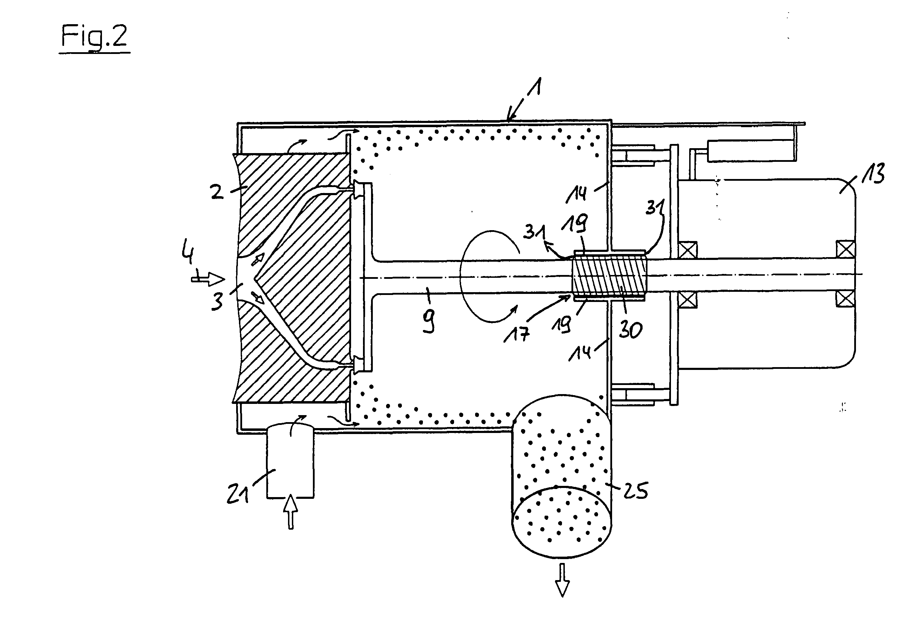

In Fig. 2 ist eine weitere vorteilhafte alternative Ausgestaltung der Vorrichtung dargestellt. Diese stimmt weitgehend mit der Vorrichtung gemäß Fig. 1 überein. Jedoch ist an der Endwandung 14 im Inneren des Granuliergehäuses 1 im Bereich des Durchtritts der Welle 9 in das Granuliergehäuse 1 ein die Welle 9 ringförmig umgebendes Flanschelement 19 angeordnet, wobei die Durchströmöffnung 17 in diesem Flanschelement 19 ausgebildet ist und die Welle 9 zylindermantelförmig bzw. zylinderringförmig allseitig umgibt. Die Welle 9 berührt weder das Granuliergehäuse 1 noch das Flanschelement 19 und läuft an sich völlig berührungsfrei und somit reibungs - und verschleißfrei und beabstandet vom Granuliergehäuse 1 und/oder dem Flanschelement 19.

In der Durchströmöffnung 17 und zwar umgeben vom Flanschelement 19 ist ein die Welle 9 zylindermantelförmig bzw. zylinderringförmig umgebendes Rückfördergewinde 30 angeordnet. Dieses Rückfördergewinde 30 liegt berührungslos beabstandet oder bestenfalls leicht schleifend an der Welle 9 an und fördert nach innen in Richtung des Granuliergehäuses 1. Auf diese Weise kann allfälliges Restwasser entfernt werden bzw. wird eine Art Ausfallsschutz geschaffen, falls das Vakuum im Granuliergehäuse 1 zu gering wird oder zwischenzeitlich ausfällt. Die Luftdurchströmung wird durch das Rückfördergewinde 30 nicht wesentlich behindert bzw. ist trotzdem eine permanent offene Durchströmöffnung 17 gegeben.

Das Granuliergehäuse 1 ist so ausgelegt, dass allfällige Undichtheiten des Granuliergehäuses 1 so gering sind, dass im Betrieb immer ausreichend Luft durch die Durchströmöffnung 17 ins Innere des Granuliergehäuses 1 gesaugt wird und ein ausreichend starker Luftstrom durch die Durchströmöffnung 17 gegeben ist, um einen Aus- bzw. Durchtritt von Wasser durch die Durchströmöffnung 17 zu verhindern. Vorteilhaft ist es, wenn das Granuliergehäuse 1 im Betrieb bis auf die Durchströmöffnung 17 und die Zu- und Ableitungen 21,25 für das Kühlmedium ausreichend gasdicht ausgebildet ist.

## Patentansprüche

1. Vorrichtung zur Heißabschlag-Granulierung, insbesondere von thermoplastischem Kunststoffmaterial, bei der die von einem Extruder aufgeschmolzenen Materialstränge in einem Granuliergehäuse (1) von rotierenden Messern (11), die auf einer über einen Motor (13) angetriebenen Welle (9) angeordnet sind, zu Granulatkörnchen abgeschlagen werden, wobei die Granulatkörnchen von einem im Granuliergehäuse (1) strömenden Kühlmedium erfasst, gekühlt und aus dem Granuliergehäuse (1) ausgetragen werden, *wobei sich im Granuliergehäuse (1) im Betrieb ein gewisser Unterdruck im Vergleich zur äußeren Umgebung ausbildet,* **dadurch gekennzeichnet, dass** zwischen der Welle (9) und demjenigen Bereich des Granuliergehäuses (1), in dem die Welle (9) das Granuliergehäuse (1) durchsetzt, eine, eine durchgehende Fluidverbindung zwischen dem Inneren des Granuliergehäuses (1) und der äußeren Umgebung *der Vorrichtung* herstellende, Durchströmöffnung (17) ausgebildet ist.

2. Vorrichtung nach Anspruch 1, **dadurch gekennzeichnet, dass** die Welle (9) zum Abschlagen der Granulatkörnchen durch die Messer (11) mit optimalem Schneiddruck, axial in Richtung ihrer Längsachse (8) verstellbar bzw. verschiebbar ist.

3. Vorrichtung nach Anspruch 1 oder 2, **dadurch gekennzeichnet, dass** die Welle (9) von der Durchströmöffnung (17) vollständig und allseitig in Form eines Ringspaltes bzw. zylindermantelförmig umgeben ist bzw. dass um die Welle (9) ein ringsspaltförmiger Freiraum ausgespart ist und die Welle (9) das Granuliergehäuse (1) berührungsfrei durchsetzt.

4. Vorrichtung nach einem der Ansprüche 1 bis 3, **dadurch gekennzeichnet, dass** die Welle (9) und/oder der Motor (13) außerhalb des Granuliergehäuses (1) gelagert sind.

5. Vorrichtung nach einem der Ansprüche 1 bis 4, **dadurch gekennzeichnet, dass** im Bereich des Durchtritts der Welle (9) in das Granuliergehäuse (1) im Inneren des Granuliergehäuses (1) ein die Welle (9) umgebendes Flanschelement (17) angeordnet ist, wobei die Durchströmöffnung (17) im Flanschelement (19) ausgebildet ist und die Welle (9) in Form eines Ringspaltes bzw. zylindermantelförmig umgibt.

6. Vorrichtung nach einem der Ansprüche 1 bis 5, **dadurch gekennzeichnet, dass** die Durchströmöffnung (17) permanent offen ist bzw. einen permanenten Gaseintritt gewährt und/oder frei von Dichtmitteln, insbesondere frei von einem oder mehreren Dichtringen und/oder einem Schmiermittelfilm, ist.

7. Vorrichtung nach einem der Ansprüche 1 bis 6, **dadurch gekennzeichnet, dass** in der Durchströmöffnung (17) ein, vorzugsweise im Flanschelement (19) gelagertes, nach innen förderndes, die Welle (9) umgebendes Rückfördergewinde (30) angeordnet ist.

8. Vorrichtung nach einem der Ansprüche 1 bis 7, **dadurch gekennzeichnet, dass** eine zusätzliche Vakuumpumpe vorgesehen ist, die den Unterdruck im Granuliergehäuse (1) bewirkt.

9. Vorrichtung nach einem der Ansprüche 1 bis 8, **dadurch gekennzeichnet, dass** das Granuliergehäuse (1) stabil gegen Unterdruck ist und dass das Granuliergehäuse (1) so ausgelegt ist bzw. dass die Undichtheiten des Granuliergehäuses (1) so gering sind, dass immer ausreichend Luft durch die Durchströmöffnung (17) ins Innere des Granuliergehäuses (1) gesaugt wird und ein ausreichend starker Luftstrom durch die Durchströmöffnung (17) gegeben ist, um einen Aus- bzw. Durchtritt von Kühlmedium durch die Durchströmöffnung (17) zu verhindern, insbesondere dass das Granuliergehäuse (1) im Betrieb bis auf die Durchströmöffnung (17) und die Zu- und Ableitungen (21,25) für das Kühlmedium gasdicht ausgebildet ist.

10. Verfahren zum Betrieb der Vorrichtung nach einem der Ansprüche 1 bis 9 als Heißabschlag-Granulierungsvorrichtung, wobei ins Innere des Granuliergehäuses (1) ein Kühlmedium, insbesondere Kühlwasser oder eine Mischung aus Wasser und Glykol, eingeleitet wird und im Granuliergehäuse (1) ein umlaufender Ring bzw. Mantel des Kühlmediums ausgebildet wird, wobei die Geschwindigkeit des Kühlmediumstromes so eingestellt wird, dass ein ausreichend starker Luftstrom durch die Durchströmöffnung (17) gegeben ist, um einen Aus- bzw. Durchtritt des Kühlmediums durch die Durchströmöffnung (17) zu verhindern.

## Claims

1. A device for hot die face pelletising, particularly of thermoplastic plastic materials, in which the extruded material molten by an extruder is cut into pellets in a pelletising housing (1) by rotating knives (11) which are arranged on a shaft (9) which is driven by a motor (13), said pellets being carried away, cooled and transported out of the pelletising housing (1) by a cooling medium flowing through the pelletising housing (1), a certain negative pressure, compared to the outside, being created inside the pelletising housing (1) during operation, **characterised in that** a flow-through opening (17) which creates a continuous fluid connection between the interior of the pelletising housing (1) and the outside of the device is formed between the shaft (9) and the area of the pelletising housing (1) in which the shaft (9) extends through the pelletising housing (1).

2. The device according to claim 1, **characterised in that** the shaft (9) can be axially moved or displaced in the direction of its longitudinal axis (8) in order to provide an optimal cutting pressure for the knives (11) for cutting the pellets.

3. The device according to claim 1 or claim 2, **characterised in that** the shaft (9) is completely surrounded by the flow-through opening (17) in the form of an annular passage or the lateral surface of a cylinder at all sides or **in that** a space in the form of an annular passage is left free around the shaft (9) and the shaft (9) extends through the pelletising housing (1) without contacting it.

4. The device according to any one of the claims 1 to 3, **characterised in that** the shaft (9) and/or the motor (13) is/are arranged outside the pelletising housing (1).

5. The device according to any one of the claims 1 to 4, **characterised in that** a flange element (17) which surrounds the shaft (9) is arranged inside the pelletising housing (1) in the area in which the shaft (9) extends into the pelletising housing (1), the flow-through opening (17) being formed within the flange element (19) and surrounds the shaft (9) in the form of an annular passage or the lateral surface of a cylinder.

6. The device according to any one of the claims 1 to 5, **characterized in that** the flow-through opening (17) is permanently open and constitutes a permanent gas inlet and/or is free from sealing means, particularly free from one or several sealing rings and/or a lubricant film.

7. The device according to any one of the claims 1 to 6, **characterized in that** a back conveying thread (30) which conveys water inwards and surrounds the shaft (9) is arranged in the flow-through opening (17), preferably in the flange element (19),

8. The device according to any one of the claims 1 to 7, **characterized in that** an additional vacuum pump is provided for creating the negative pressure inside the pelletising housing (1).

9. The device according to any one of the claims 1 to 8, **characterized in that** the pelletising housing (1) is stable in relation to negative pressure and **in that** the pelletising housing (1) is configured in a way and **in that** leaks in the pelletising housing (1) are so small that sufficient air is sucked through the flow-through opening (17) into the pelletising housing (1) at all times and the airflow through the flow-through opening (17) is sufficiently strong to prevent cooling medium from leaking out of or through the flow-through opening (17), and particularly **in that** the pelletising housing (1) is gas-tight during operation, except for the flow-through opening (17) and the supplies and discharges (21, 25) for the cooling medium.

10. A method for operating a device according to any one of the claims 1 to 9 as a hot die face pelletising device, a cooling medium, particularly cooling water or a mixture of water and glycol, being introduced into the pelletising housing (1) and a surrounding ring or jacket of cooling medium being formed inside the pelletising housing (1), the flow rate of the cooling medium being adjusted in a way that the airflow through the flow-through opening (17) is sufficiently strong to prevent cooling medium from leaking out of or through the flow-through opening (17).

## Revendications

1. Dispositif pour la granulation à chaud, notamment d'une matière plastique thermoplastique, dans lequel la matière extrudée, fondue par une extrudeuse, est coupée en granulés dans une boîte à granulation (1) par des couteaux (11) rotatifs qui sont aménagés sur un arbre (9) actionné par un moteur (13), lesdits granulés étant emportés, refroidis et transportés hors de la boîte à granulation (1) par un agent réfrigérant coulant à travers la boîte à granulation (1), une certaine pression négative, par rapport à l'extérieur, étant créée à l'intérieur de la boîte à granulation (1) au cours du service, **caractérisé en ce qu'**un orifice d'écoulement (17), créant une connexion fluidique directe entre l'intérieur de la boîte à granulation (1) et l'extérieur du dispositif, est formé entre l'arbre (9) et l'endroit de la boîte à granulation (1) où l'arbre (9) s'étend à travers la boîte à granulation (1).

2. Dispositif selon la revendication 1, **caractérisé en ce que** l'arbre (9) peut être axialement ajusté ou déplacé dans la direction de son axe longitudinal (8) pour assurer une pression de coupe optimale des couteaux (11) pour couper les granulés.

3. Dispositif selon la revendication 1 ou 2, **caractérisé en ce que** l'arbre (9), à tous ses côtés, est complètement entouré par l'orifice d'écoulement (17) en forme d'un espace annulaire ou d'une enveloppe cylindrique ou **en ce qu'**un espace en forme d'un espace annulaire est réservé autour de l'arbre (9) et l'arbre (9) s'étend à travers la boîte à granulation (1) sans la contacter.

4. Dispositif selon l'une des revendications 1 à 3, **caractérisé en ce que** l'arbre (9) et/ou le moteur (13) est/sont aménagé/s hors de la boîte à granulation (1).

5. Dispositif selon l'une des revendications 1 à 4, **caractérisé en ce qu'**un élément de flasque (17) entourant l'arbre (9) est aménagé à l'intérieur de la boîte à granulation (1) à l'endroit où l'arbre (9) passe dans la boîte à granulation (1), l'orifice d'écoulement (17) étant formé dans l'élément de flasque (19) et entourant l'arbre (9) en forme d'un espace annulaire ou d'une enveloppe cylindrique.

6. Dispositif selon l'une des revendications 1 à 5. **caractérisé en ce que** l'orifice d'écoulement (17) est toujours ouvert et forme une entrée à gaz permanente et/ou est sans des moyens d'étanchéité, notamment sans un ou de plusieurs anneaux d'étanchéité et/ou sans un film lubrifiant.

7. Dispositif selon l'une des revendications 1 à 6, **caractérisé en ce qu'**un filet de retour (30) transportant l'eau vers l'intérieur et entourant l'arbre (9) est aménagé dans l'orifice d'écoulement (17), de préférence dans l'élément de flasque (19).

8. Dispositif selon l'une des revendications 1 à 7, **caractérisé en ce qu'**une pompe à vide additionnelle est prévue pour créer la pression négative à l'intérieur de la boîte à granulation (1).

9. Dispositif selon l'une des revendications 1 à 8, **caractérisé en ce que** la boîte à granulation (1) est stabile par rapport les pressions négatives et **en ce que** la boîte à granulation (1) est configurée et **en ce que** des fuites dans la boîte à granulation (1) sont assez petites pour qu'une quantité d'air suffisante soit constamment aspirée à travers l'orifice d'écoulement (17) dans la boîte à granulation (1) et le courant d'air à travers l'orifice d'écoulement (17) soit suffisamment puissant pour empêcher l'agent réfrigérant d'échapper par l'orifice d'écoulement (17), et notamment **en ce que** la boîte à granulation (1) est étanche au gaz en service, à l'exception de l'orifice d'écoulement (17) et les conduites d'alimentation et de dérivation (21, 25) pour l'agent réfrigérant.

10. Procédé pour actionner un dispositif selon l'une des revendications 1 à 9 comme granulatrice à chaud, un agent réfrigérant, notamment de l'eau réfrigérante ou un mélange d'eau et de glycol, étant introduit dans la boîte à granulation (1) et un anneau ou une enveloppe d'agent réfrigérant entourant étant formé(e) à l'intérieur de la boîte à granulation (1), la vitesse d'écoulement de l'agent réfrigérant étant ajustée pour que e courant d'air à travers l'orifice d'écoulement (17) soit suffisamment puissant pour empêcher l'agent réfrigérant d'échapper par l'orifice d'écoulement (17).
